# EUROPÄISCHE PATENTANMELDUNG

(11) **EP 1 582 466 A2**
(43) Veröffentlichungstag der Anmeldung: **05.10.2005**
(21) Anmeldenummer: 05006530.9
(22) Anmeldetag: 24.03.2005
(51) Int. Cl.: B65B 39/00, B65B 9/20

(54) **Vertikale Schlauchbeutelmaschine zum Verpacken von Gegenständen**

(30) Priorität: 03.04.2004 DE 102004016499; 22.12.2004 DE 102004061825
(71) Anmelder: ROVEMA VERPACKUNGSMASCHINEN GMBH, 35463 Fernwald (DE)
(72) Erfinder: Kuss, Gerhard, 35584 Wetzlar (DE); Nicolai, Torsten, 35418 Buseck (DE); Baur, Walter, Dr., 63584 Gründau (DE)

(57) **Zusammenfassung**

Um mittels einer vertikalen Schlauchbeutelmaschine (1) Stapel (137) aufeinandergelegter Gegenstandsgruppen (23), insbesondere aus Kaffeepads in Schlauchbeutel (16) abpacken zu können, wird vorgeschlagen, ein Füllrohr (6) entweder an die horizontalen Abmessungen der Gegenstandsgruppen (23) anzupassen oder mit einem Einsatz (125) zu versehen, um den Stapel während seiner Fallbewegung im Füllrohr (6) zu stabilisieren. Der Einsatz (125) ist ebenso der Geometrie der Gegenstände angepasst, um diese während ihres Falls im Füllrohr (6) zu stabilisieren.

## Beschreibung

Die Erfindung betrifft die Verpackungsbranche und dort eine vertikale Schlauchbeutelmaschine mit einer von einer Vorratsrolle abgewickelten Folienbahn. Eine derartige Maschine weist eine Formschulter zum Umformen der Folienbahn zu einem Folienschlauch auf und ein vertikal ausgerichtetes Füllrohr, welches den Folienschlauch aufnimmt und durch das eine Befüllung des Folienschlauches möglich ist. Eine Befüllstation für abzupackende Gegenstände oberhalb des Füllrohres dient dieser Befüllung. Ein gegen den Folienschlauch und damit gegen das Füllrohr wirkender Folienabzug ist zum Weitertransportieren der Folienbahn und des Folienschlauches vorgesehen. Eine Längssiegeleinrichtung dient zum Verschweißen des Folienschlauches mittels einer in Transportrichtung ausgerichteten Längsnaht und eine Quersiegeleinrichtung mit zwei gegeneinander beweglichen, den Folienschlauch quer verschweißenden Schweißbacken zum Erzeugen von Kopfnähten und Bodennähten von Schlauchbeuteln. Mittels einer Trenneinrichtung werden die fertiggestellten Schlauchbeutel vom Folienschlauch abgetrennt.

Derartige vertikale Schlauchbeutelmaschinen sind hinlänglich bekannt. Sie dienen in der Regel zum Abpacken fließfähiger oder riesenfähiger Produkte, wie z. B. Granulate. Prinzipiell kann auch stückiges Produkt verpackt werden.

Die bekannten vertikalen Schlauchbeutelmaschinen haben den Nachteil, dass sie zum Abpacken von Gegenständen, die eine Gegenstandsgruppe bilden, in Form von in Schlauchbeutel zu bringende, vertikale Stapel wenig geeignet sind, da sich die Gegenstände während ihres freien Falls im Füllrohr drehen und somit unkontrollierbar im verschweißten Ende des Folienschlauches landen. Unter Gegenstandsgruppe ist im Rahmen dieser Anmeldung aus Vereinfachungsgründen entweder ein einziger, horizontal ausgerichteter Gegenstand wie z. B. ein Kaffeepad gemeint oder eine Gruppe von zwei oder mehr in horizontaler Richtung direkt nebeneinander angeordneter Gegenstände (wie z. B. Kaffeepads).

Wegen dieser Fallproblematik werden horizontale Gegenstandsgruppen (Einzel-, Doppel-, Dreifachgruppe, ...) nicht mittels vertikaler Schlauchbeutelmaschinen verpackt. Statt dessen werden diese Gruppen in zuvor erzeugte, standfähige Leerbeutel hinein gestapelt, was vergleichsweise aufwändig und damit teuer ist, da zum Erzeugen der Leerbeutel ohnehin eine vertikale Schlauchbeutelmaschine genutzt wird.

Der Erfindung liegt die Aufgabe zu Grunde, eine vertikale Schlauchbeutelmaschine derart auszuführen, dass sie zum Abpacken von Gegenstandsgruppen, die einen Stapel im Schlauchbeutel bilden sollen, genutzt werden kann.

Gelöst ist die Aufgabe gemäß dem kennzeichnenden Teil des Anspruchs 1. Danach ist die Befüllstation zum Abgeben jeweils einer vertikal gestapelten, aus horizontal ausgerichteten flachen, vorzugsweise scheibenförmigen, Gegenständen gebildeten Gegenstandsgruppe vorgesehen, und am Füllrohr ist eine Anpassung bezüglich der horizontalen Abmessungen der Gegenstandsgruppe vorgesehen.

Die vorgeschlagene Schlauchbeutelmaschine hat den Vorteil, dass sie zum Abpacken eines vertikalen Stapels von Gegenständen oder Gegenstandsgruppen in Schlauchbeutel geeignet ist. Bildet nur ein Gegenstand eine Gegenstandsgruppe, so werden alle Gegenstände aufeinander gestapelt. Bilden zwei oder mehr Gegenstände eine horizontal ausgerichtete Gegenstandsgruppe, so werden zwei oder mehr derartige Stapel nebeneinander in einen Schlauchbeutel gefüllt. Dabei spielt es keine Rolle, ob die Gegenstandsgruppen einzeln und nacheinander oder als Stapel an die Befüllstation gebracht werden. Ein Stapel fällt sicher durch das Füllrohr, da er dort stabilisiert wird, bis er im unteren Ende des Folienschlauches landet. Die Anpassung am Füllrohr ist für Einzelgegenstandsstapel bzw. mehrere Stapel, die nebeneinander durch das Füllrohr fallen, bzw. für einen Einzelgegenstandsabwurf oder einen einzelnen Abwurf von Gegenstandsgruppen vorgesehen.

Weitere, vorteilhafte Ausgestaltungen der vorgeschlagenen Schlauchbeutelmaschine sind in den Ansprüchen 2 bis 18 beschrieben.

Ist gemäß Anspruch 2 das Füllrohr bezüglich seines Querschnittes an die horizontalen Abmessungen der Gegenstandsgruppe angepasst und sind im Füllrohr als Fallstabilisatoren dienende Führungen vorgesehen, die passgenau die im Füllrohr fallenden Gegenstandsgruppen begrenzen, so werden derart die Gegenstandsgruppen in sicherer Weise durch das Füllrohr gebracht, ohne so stark zu verkippen, dass ein instabiler Stapel erzeugt würde.

Ist gemäß Anspruch 10 im Füllrohr ein Einsatz vorgesehen, welcher der Geometrie der Gegenstände angepasst ist, um diese während ihres Falls im Füllrohr zu stabilisieren, so wird ebenfalls dieser Vorteil erreicht. Zudem können herkömmliche Füllrohr nur rechteckigem Querschnitt (mit oder ohne abgerundete Ecken), runder oder teilweise runder und gerader Form in ihrem Querschnitt eingesetzt werden, um mittels dieses Einsatzes Stapel bilden zu können.

Eine sehr gute Führung des Stapels durch das Füllrohr wird erreicht, wenn gemäß Anspruch 3 die Gegenstände rund sind und in jeweils einer Ecke des Füllrohres eine Führung in Form einer die Ecke abschließenden Schräge vorgesehen ist. Dabei kann die genaue Ausgestaltung der Schräge der Gegenstandsabmessung angepasst werden. Die Führung eignet sich für Einzel-, Doppel- und Dreifachstapel (Gegenstandsgruppe mit einem Gegenstand bzw. zwei oder drei Gegenständen).

Ein korrekter Stapelfall unter Beibehaltung einer kompakten Stapelhöhe wird insbesondere erreicht, wenn gemäß Anspruch 4 jeweils zwei sich überlappende Gegenstände in horizontaler Richtung im Stapel nebeneinander vorgesehen sind, und als Führung auf gegenüberliegenden Seiten des Füllrohres nach innen spitz zulaufende, zwischen die beiden Gegenstände sich erstreckende Führungsspitzen vorgesehen sind. Ein derartiger Stapel eignet sich insbesondere für Kaffeepads. Er ist ein Doppelstapel mit jeweils abwechseln ineinander greifenden Rändern der Gegenstände der beiden diesen bildenden Einzelstapel (einfach übereinander gestapelte, einzelne Gegenstände).

Ein Schlauchbeutel kann mit einem Schutzgas ausgestaltet werden, wenn eine Führung eine Gaszuführung und eine andere Führung eine Entlüftung für das untere Ende des Folienschlauches begrenzt (Anspruch 5). Derart ist ein Durchströmen eines zu fertigenden Schlauchbeutels mittels eines Schutzgases möglich, so dass der zu verpackende Stapel eine besondere, z. B. Sauerstoff freie Gasatmosphäre erhält.

Sind gemäß Anspruch 6 die Breite und die Tiefe des Füllrohres der Breite und der Tiefe einer Gegenstandsgruppe derart angemessen, und ist die Gegenstandsgruppe derart oberhalb des Füllrohres platziert, dass auf gegenüberliegenden Seiten der Gegenstandsgruppe jeweils zwischen dem äußeren Rand der Gegenstandsgruppe und der inneren Oberfläche des Füllrohres ein erster gleicher Abstand in Richtung der Breite und ebenso ein zweiter gleicher Abstand in Richtung der Tiefe des Füllrohres vorgesehen ist, und haben diese Abstände nicht alle den Wert Null, wobei das Füllrohr einen zu Symmetrieachsen der Gegenstandsgruppe symmetrischen Querschnitt aufweist, und zwei gegenüberliegende, zueinander parallel, in Transportrichtung sich erstreckende Rohrsegmente des Füllrohres vorgesehen sind, an welchen die Folienabzüge angreifen, so verbleiben die horizontal ausgerichteten flachen Gegenstände auch während des freien Falls relativ sicher in dieser Ausrichtung. So liegt zunächst auf jeweils einer gegenüberliegenden Seite (in horizontaler Richtung) ein gleicher Abstand zwischen der Gegenstandsgruppe und dem Füllrohr vor, was dazu führt, dass zu Beginn des freien Falls keine Kippmomente auf eine Gegenstandsgruppe wirken.

Eine günstige Horizontalausrichtung der Gegenstandsgruppen bleibt während ihres freien Falls im Füllrohr erhalten, wenn die Abstände analog Anspruch 7 einen Wert zwischen 0 und 10 mm haben. Dann ist die an den Gegenstandsgruppen vorbeigedrängte Luft jeweils an gegenüberliegenden Seiten in stabilisierender Weise gleich vorhanden oder in gleicher Weise kaum vorhanden. Der Gleichartigkeit der Luftströmung im Füllrohr wird auch entsprochen, wenn bei runden Gegenständen, insbesondere runden Kaffeepads gemäß Anspruch 8 die Wände des Füllrohres, die einander gegenüber liegen, und die nicht zum Angreifen der Folienabzüge vorgesehen sind, einen nach außen hin weisenden Bogen, eine nach außen gerichtete Knickung oder mindestens zwei nach außen gerichtete Knickungen aufweisen. Dabei können sich die Rohrsegmente gänzlich über gegenüberliegende Wände erstrecken (Anspruch 9), um den Folienabzügen eine große Abgriffsfläche zu bieten, was für einen korrekten Folienlauf von Vorteil ist.

Weist das Füllrohr nur Seitenwände auf, die gerade oder gekrümmt sind, und die wahlweise über Rundungen miteinander verbunden sind (Anspruch 11), so können in kostengünstiger Weise herkömmliche Füllrohr eingesetzt werden, die einen guten Folienlauf erreichen. Unabhängig von der Form des Füllrohres kann die Einrichtung mit einem Austauschmechanismus versehen werden, um das Füllrohr wahlweise für Schüttgut oder für eine Stapelabpackung zu nutzen (Anspruch 18). Oder ein Einsatz kann gegen einen Einsatz anderer Geometrie ausgetauscht werden, um andere Gegenstandsgeometrien oder größere bzw. kleinere Gegenstandsgruppen abzupacken.

Ein Füllrohr kann eine spezielle, an die Geometrie der Gegenstände angepasste Form haben und trotzdem gerade oder in einfacher Weise, z. B. über einen vorgegebenen, einzigen Radius gekrümmte Seitenwände haben, wenn an einem derartigen, z. B. Längsknickungen aufweisendem Füllrohr mindestens ein Aufsatz vorgesehen ist, welcher gemeinsam mit einem geraden Abschnitt des Füllrohres eine gerade Seitenwand bildet (Anspruch 12). Oder ein gebogener Aufsatz bildet mit einer gebogenen Seitenwand des Füllrohres eine insgesamt gleichförmig gebogene Außenwand, d. h. äußerste Wandung für das Füllrohr. Derart können speziell ausgestaltete Füllrohre in für einen Folienlauf günstige Außenform gebracht werden.

Eine Gegenstandsgruppe fällt entlang einer Fallstrecke durch das Füllrohr. Begrenzt dabei gemäß Anspruch 13 der Einsatz einen an eine Fallstrecke der Gegenstände angrenzenden, zu den Gegenständen hin offenen Kanal, so dient dieser der Aufnahme von Luft, welche von den fallenden Gegenständen verdrängt wird. Die Falleigenschaften werden zuverlässiger, so dass die Verpackungsgeschwindigkeit erhöht werden kann. Dabei kann dieser Kanal auch dazu genutzt werden, die Gegenstände während ihres Falls zu halten. Dies geschieht, indem gemäß Anspruch 14 die Gegenstände einen umlaufenden Rand aufweisen, und der Einsatz so bemessen ist, dass die Gegenstände nur mit umgeknicktem Rand in den Einsatz passen, wobei ein Teil des Randes in den Kanal ragt. Ein umlaufender Rand hat dabei den Vorteil, dass die Gegenstände unabhängig von ihrer Ausrichtung bzw. ihrer Drehposition stets mit einem Teil ihres Randes in den Kanal reichen und derart in diesem geführt werden.

Genauere, reproduzierbare Fallzeiten werden auch erreicht, wenn im Füllrohr mindestens ein Entlüftungskanal zum nach oben Strömen von Luft vorgesehen ist, welche von den fallenden Gegenständen verdrängt wird.

Es ist möglich, einen Einsatz für verschiedene Gegenstandsgeometrien oder -abmessungen zu nutzen, wenn der Einsatz eine Verstelleinrichtung zum Begrenzen der Gegenstände aufweist (Anspruch 16).

Ein zusätzlicher Befüllkanal im Füllrohr (Anspruch 17) kann genutzt werden, um z. B. einen durch den Einsatz gleitenden Stapel Kaffeepads eine Zugabe beizufügen, z. B. einen Beutel mit Entkalkungsmittel für eine Kaffeemaschine, welche Kaffeepads zum Aufbrühen von Kaffee nutzt.

Im folgenden wird die Erfindung an Hand Ausführungsbeispiele darstellender Figuren näher beschrieben. Es zeigt:
- Figur 1: in einer Seitenansicht eine vertikale Schlauchbeutelmaschine mit einer Befüllstation oberhalb eines vertikalen Füllrohres, um einen Stapel Gegenstandsgruppen oberhalb des Füllrohres zu platzieren und danach in einem Schlauchbeutel abzuwerfen;
- Figur 2: in einem Schnitt entlang A-A der Figur 1 eine zuvor frei im Füllrohr fallende oberste Gegenstandsgruppe, die aus zwei sich teilweise überlappenden Gegenständen gebildet wird, wobei der Füllrohrquerschnitt dieser Gegenstandsgruppe geometrisch angepasst ist, und die Gegenstandsgruppe die oberste in einem Stapel ist, ohne Führung im Füllrohr;
- Figur 3: in einer Schnittdarstellung das Objekt der Figur 2, jedoch zusätzlich mit zwei nach innen spitz zulaufenden Führungen zum Führen der im Füllrohr fallenden Stapel;
- Figur 4: in einer Schnittdarstellung das Objekt der Figur 3, jedoch mit geringfügig geänderten Abmessungen, wobei die eine Führung eine Gaszuführung und die andere Führung eine Entlüftung begrenzt;
- Figur 5: in einer Schnittdarstellung das Objekt der Figur 4, jedoch mit einer anders geknickten Füllrohrwand;
- Figur 6: in einer Schnittdarstellung das Objekt der Figur 5, jedoch zusätzlich mit jeweils einer weiteren Führung in vier Ecken des Füllrohres;
- Figur 7: in einer Schnittdarstellung einen runden Gegenstand in einem Füllrohr, welches jeweils eine Führung in seinen vier Ecken aufweist;
- Figur 8: in einer Seitenansicht einen zu stapelnden Gegenstand;
- Figur 9: in einer Seitenansicht eine vertikale Schlauchbeutelmaschine mit einer Befüllstation oberhalb eines vertikalen, vier gerade Seitenwände aufweisenden Füllrohres, um einen Stapel Gegenstandsgruppen oberhalb des Füllrohres zu platzieren und danach in einem Schlauchbeutel abzuwerfen.
- Figur 10: in einer Seitenansicht einen Stapel, der aus aufeinandergelegten, jeweils zwei Gegenstände umfassenden Gegenstandsgruppen gebildet ist, und den es zu verpacken gilt;
- Figur 11: in einem Querschnitt entlang A-A der Figur 1 eine Gegenstandsgruppe gemäß Figur 3 im Füllrohr, wobei ein Einsatz im Füllrohr zum Führen der Gegenstandsgruppe und zu Bilden von Entlüftungskanälen ausgeführt sind, und das Füllrohr vier gerade Seitenwände aufweist;
- Figur 12: in einem Querschnitt analog Figur 4 die Gegenstandsgruppe der Figur 4 in einem anders ausgeführten Füllrohr und mit abgeändertem Einsatz;
- Figur 13: in einem Querschnitt das Füllrohr und die Gegenstandsgruppe der Figur 4, jedoch mit einem anderen Einsatz;
- Figur 14: in einem Querschnitt eine aus vier runden Gegenständen bestehende Gegenstandsgruppe in einem Füllrohr mit einem Einsatz zum jeweiligen Führen der Gegenstände;
- Figur 15: in einem Querschnitt ebenfalls runde Gegenstände in einem Füllrohr mit einem Einsatz, wobei das Füllrohr zwei gerade und zwei gekrümmte Seitenwände aufweist;
- Figur 16: in einem Querschnitt annähernd rechteckige Gegenstände in einem Füllrohr mit Einsatz;
- Figur 17: in einem Querschnitt zwei Gegenstände, welche teilweise gerade und teilweise rund ausgestaltet sind, in einem Füllrohr mit Einsatz;
- Figur 18: in einem Querschnitt eine aus zwei Gegenständen gebildete Gegenstandsgruppe in einem Füllrohr, welches in einer einstückigen Weise einen Einsatz ausbildet, welches vier Aufsätze aufweist, die jeweils einen Entlüftungskanal begrenzen, und in dem zwei an eine Fallstrecke angrenzende Kanäle vorgesehen sind;
- Figur 19: in einem Querschnitt eine aus einem Gegenstand gebildete Gegenstandsgruppe in einem Füllrohr mit Einsatz;
- Figur 20: in einem Querschnitt eine aus zwei Gegenständen gebildete Gegenstandsgruppe in einem Füllrohr mit Einsatz;
- Figur 21: in einem Querschnitt eine aus zweiabgerundeten Gegenständen gebildete Gegenstandsgruppe in einem Füllrohr mit Einsatz, wobei das Füllrohr vier über Rundungen miteinander verbundene Seitenwände aufweist;
- Figur 22: in einem Querschnitt eine aus drei trapezförmigen Gegenständen gebildete Gegenstandsgruppe in einem Füllrohr mit Einsatz;
- Figur 23: in einem Querschnitt eine aus zwei rechteckigen Gegenständen gebildete Gegenstandsgruppe in einem Füllrohr, mit einem Einsatz, welcher aus zwei an die Fallstrecke angrenzende Kanäle und vier Entlüftungskanäle begrenzt;
- Figur 24: in einem Querschnitt eine aus einem Gegenstand gebildete Gegenstandsgruppe in einem Füllrohr mit verstellbarem Einsatz, und mit einer Zugabe in einem separaten Befüllkanal innerhalb des Füllrohres, sowie
- Figur 25: in einem Querschnitt eine aus zwei Gegenständen gebildete Gegenstandsgruppe in einem runden, teilweise begradigtem Füllrohr.

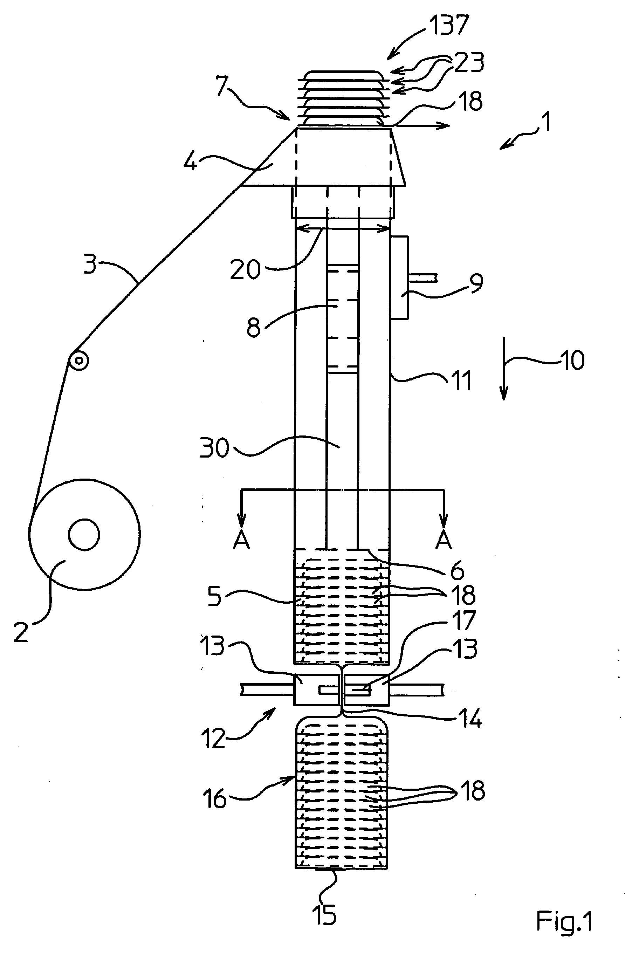

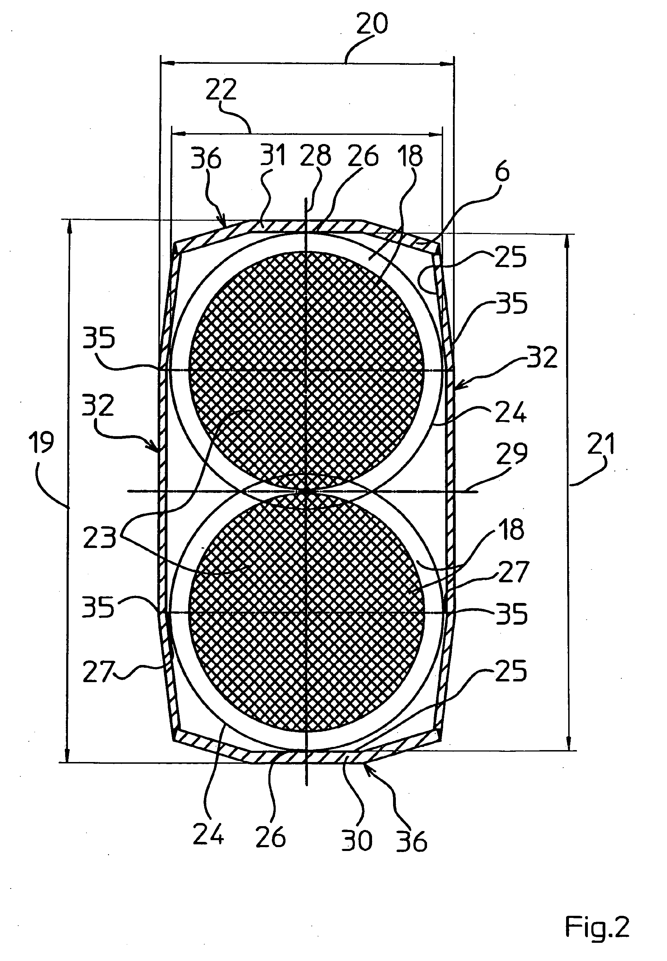

Bei einer vertikalen Schlauchbeutelmaschine 1 mit einer von einer Vorratsrolle 2 abgewickelten Folienbahn 3 dient eine Formschulter 4 zum Umformen der Folienbahn 3 zu einem Folienschlauch 5 (Figur 1). Ein vertikal ausgerichtetes Füllrohr 6 nimmt den Folienschlauch 5 auf und dient zur Befüllung des Folienschlauches 5 mittels einer Befüllstation 7 oberhalb des Füllrohres 6. Zwei von gegenüberliegenden Seiten des Füllrohres 6 gegen den Folienschlauch 5 und damit gegen das Füllrohr 6 wirkende Folienabzüge 8 sind zum Weitertransportieren der Folienbahn 3 und des Folienschlauches 5 vorgesehen. Eine Längssiegeleinrichtung 9 dient zum Verschweißen des Folienschlauches 5 mittels einer in Transportrichtung 10 ausgerichteten Längsnaht 11. Eine Quersiegeleinrichtung 12 mit zwei gegeneinander beweglichen, den Folienschlauch 5 quer verschweißenden Schweißbacken 13 ist zum Erzeugen von Kopfnähten 14 und Bodennähten 15 von Schlauchbeuteln 16 vorgesehen. Eine Trenneinrichtung 17 trennt die Schlauchbeutel 16 vom Folienschlauch 5 ab. Die Befüllstation 7 ist zum Abgeben jeweils eines Stapels aus horizontal ausgerichteten, flachen, scheibenförmigen, aus jeweils zwei Gegenständen 18 gebildeten Gegenstandsgruppe 23 vorgesehen. Das Füllrohr 6 ist bezüglich seines Querschnittes an die horizontalen Abmessungen dieser Gegenstandsgruppe 23 angepasst (Figur 2), wobei die Breite 19 und die Tiefe 20 des Füllrohres 6 der Breite 21 und Tiefe 22 der Gegenstandsgruppe 23 derart angemessen sind, und die Gegenstandsgruppe 23 derart oberhalb des Füllrohres 6 platziert ist, dass auf gegenüberliegenden Seiten der Gegenstandsgruppe 23 jeweils zwischen dem äußeren Rand 24 der Gegenstandsgruppe 23, und der inneren Oberfläche 25 des Füllrohres 6 ein erster gleicher Abstand 26, der den Wert Null hat, in Richtung der Breite 19 und ein zweiter gleicher Abstand 27, der einen Wert von ca. 1 mm hat, in Richtung der Tiefe 20 des Füllrohres 6 vorgesehen ist.

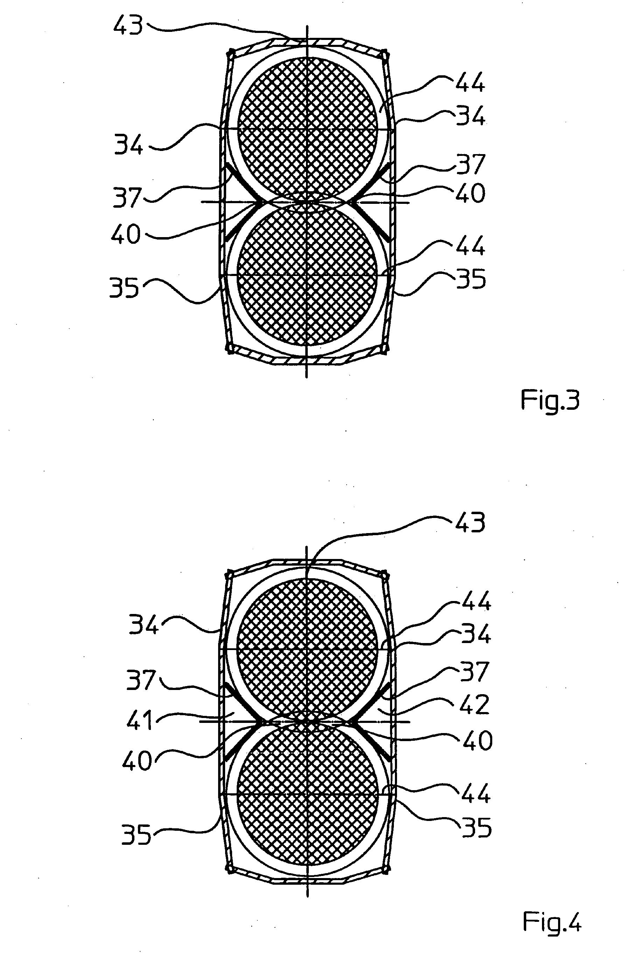

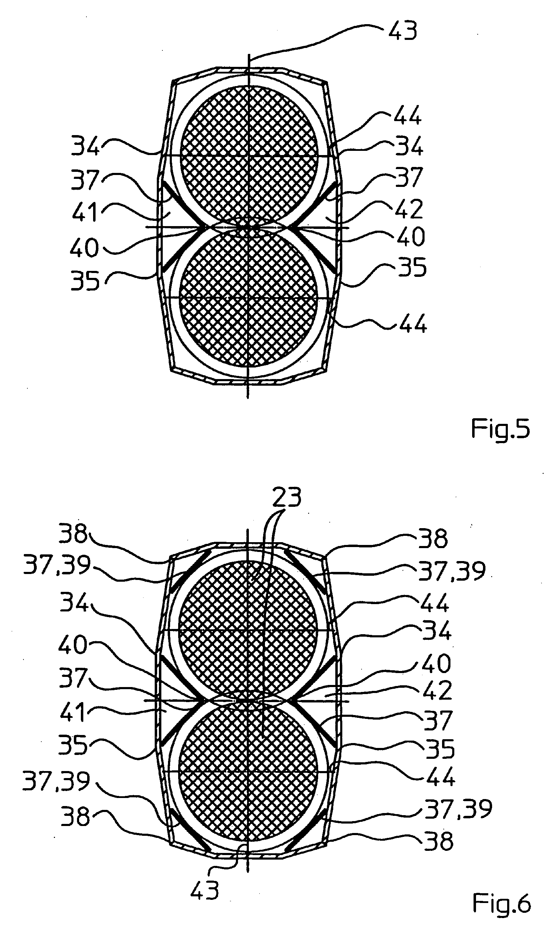

Das Füllrohr 6 ist bezüglich seines Querschnittes an die horizontalen Abmessungen der Gegenstandsgruppe 23 angepasst. Im Füllrohr 6 sind als Fallstabilisatoren dienende Führungen 37 vorgesehen, die passgenau die im Füllrohr 6 fallenden Gegenstandsgruppen 23 begrenzen (Figur 3, Figur 4). Dabei liegen Knickungen 34, 35 des Füllrohres 6 in etwa auf Achsen 44 der Gegenstände (Kaffeepads), um ein möglichst gutes Fallen des Stapels zu bewirken. In einer anderen Ausgestaltung (Figur 5, Figur 6) sind dagegen die Knickungen 34, 35 an den Schenkeln der Führungsspitzen 40 vorgesehen. Auch hierbei werden ausgezeichnete Falleigenschaften erzielt, die zu einer hohen Verpackungsleistung führen. Beim Ausführungsbeispiel der Figur 6 werden die beiden runden, sich teilweise überlappenden Gegenstände 23 und damit der Stapel zudem derart während ihres freien Falls dadurch geführt, dass in jeweils einer Ecke 38 des Füllrohres 6 eine Führung 37 in Form einer die Ecke 38 abschließenden Schräge 29 vorgesehen ist.

Das Füllrohr 6 (Figur 2) weist einen zu Symmetrieachsen 28, 29 der Gegenstandsgruppe 23 symmetrischen Querschnitt auf. Zwei gegenüberliegende, zueinander parallele, in Transportrichtung 10 sich erstreckende Rohrsegmente 30, 31 des Füllrohres 6 sind dazu vorgesehen, dass die Folienabzüge 8 an ihnen angreifen. Diese Symmetrie führt zu einem gleichförmigen Folienlauf.

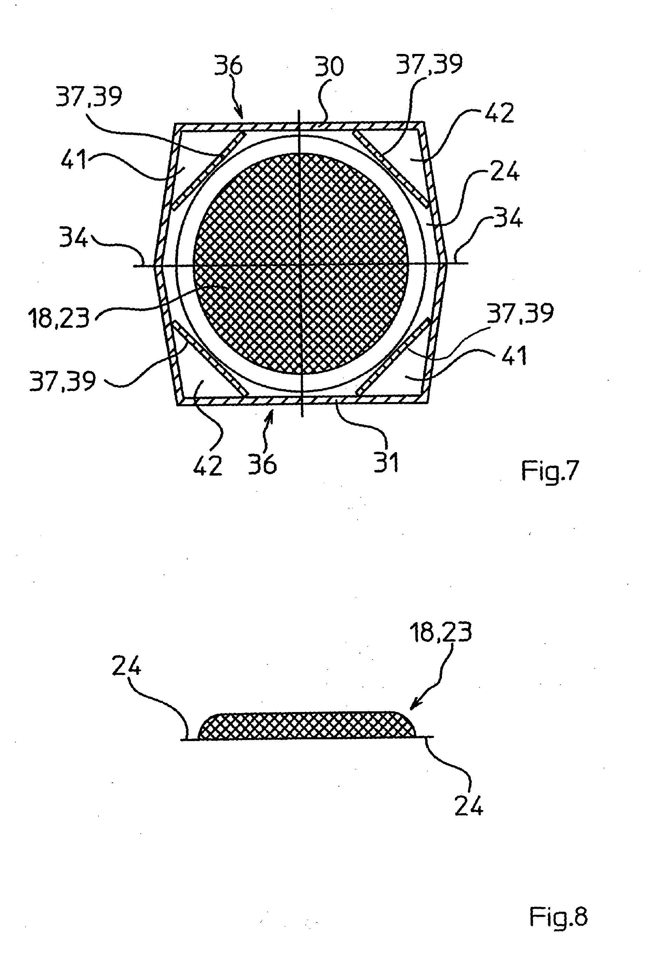

Die Wände 32 des Füllrohres 6, die einander gegenüber liegen, und die nicht zum Angreifen der Folienabzüge 8 vorgesehen sind, weisen eine nach außen gerichtete Knickung 34 (Figur 7) oder zwei nach außen gerichtete Knickungen 34, 35 auf.

Jeweils zwei sich überlappende Gegenstände 23 (Figur 8) sind in horizontaler Richtung im Stapel nebeneinander vorgesehen, wobei als Führung 37 die auf gegenüberliegenden Seiten des Füllrohres 6, nach innen spitz zulaufenden, zwischen die beiden Gegenstände 23 sich erstreckenden Führungsspitzen 40 vorgesehen sind (Figur 3 bis 6).

Auch beim Ausführungsbeispiel der Figur 7 begrenzt jeweils eine Führung 37 eine Gaszuführung 41 bzw. eine Entlüftung 42 für das untere Ende des Folienschlauches 5. Durch die jeweils gegenüberliegenden Anordnungen der Gaszuführung 41 und der Entlüftung 42 wird eine besonders gute Schutzatmosphäre erzielt. Bei diesem Ausführungsbeispiel erstrecken sich die Rohrsegmente 30, 31 gänzlich über gegenüberliegende Wände 36.

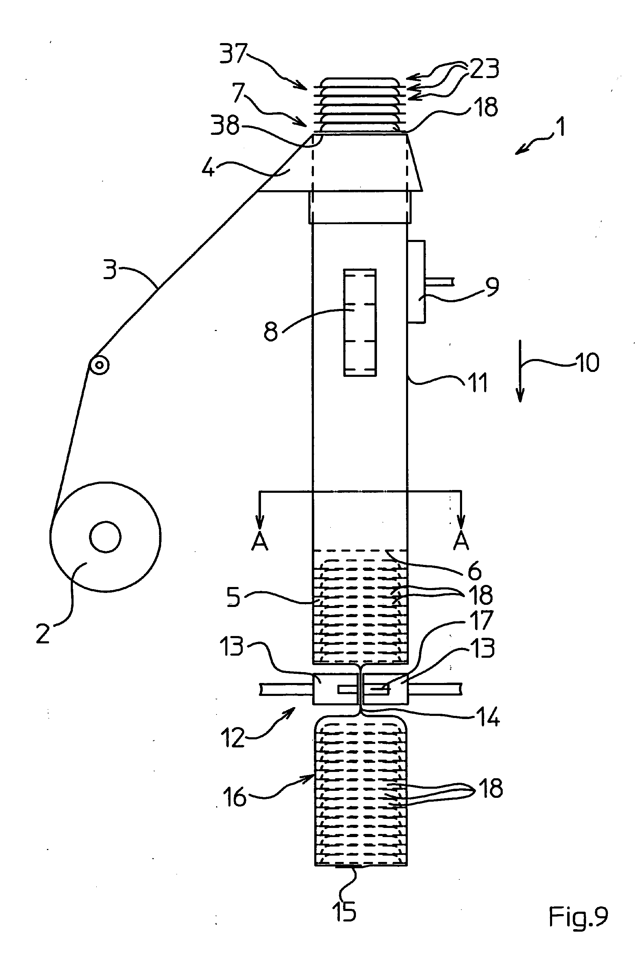

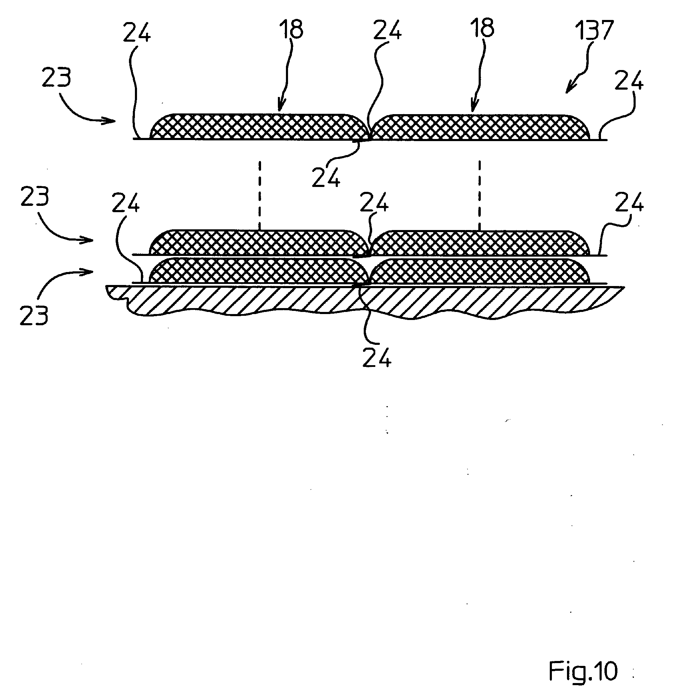

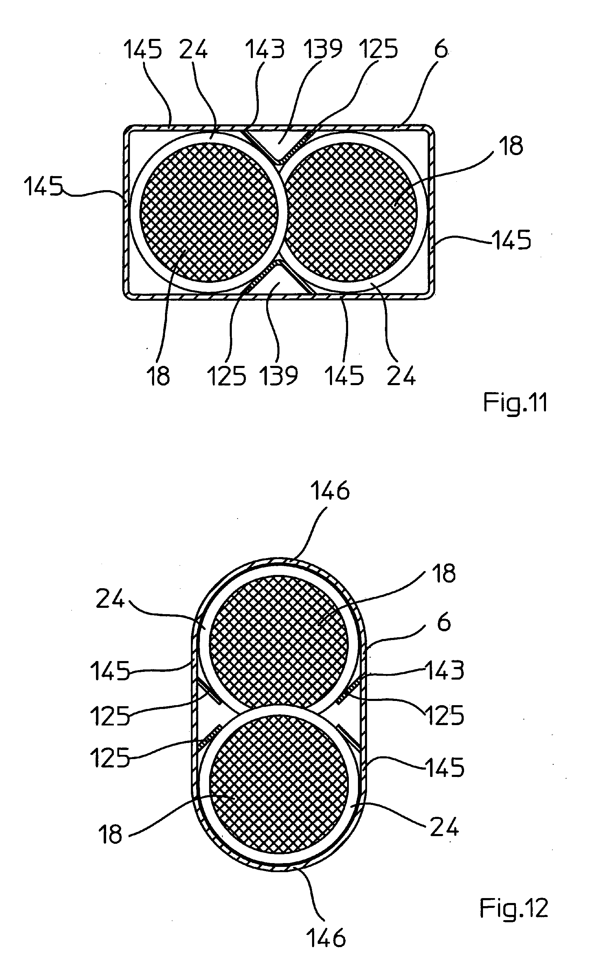

In einem weiteren Ausführungsbeispiel dient eine vertikale Schlauchbeutelmaschine 1 mit einer Vorratsrolle 2 abgewickelten Folienbahn 3 eine Umlenkkante 38 einer Formschulter 4 zum Umformen der Folienbahn 3 zu einem Folienschlauch 5 (Figur 9). Ein vertikal ausgerichtetes Füllrohr 6 herkömmlicher Bauart nimmt den Folienschlauch 5 auf und dient zur Befüllung des Folienschlauches 5 mittels einer Befüllstation 7 oberhalb des Füllrohres 6. Zwei von gegenüberliegenden Seiten des Füllrohres 6 gegen den Folienschlauch 5 und damit gegen das Füllrohr 6 wirkende Folienabzüge 8 sind zum Weitertransportieren der Folienbahn 3 und des Folienschlauches 5 vorgesehen. Eine Längssiegeleinrichtung 9 dient zum Verschweißen des Folienschlauches 5 mittels einer in Transportrichtung 10 ausgerichteten Längsnaht 11. Eine Quersiegeleinrichtung 12 mit zwei gegeneinander beweglichen, den Folienschlauch 5 quer verschweißenden Schweißbacken 13 ist zum Erzeugen von Kopfnähten 14 und Bodennähten 15 von Schlauchbeuteln 16 vorgesehen. Eine Trenneinrichtung 17 trennt die Schlauchbeutel 16 vom Folienschlauch 5 ab. Die Befüllstation 7 ist zum Abgeben jeweils eines Stapels 137 aus horizontal ausgerichteten, flachen, schiebenförmigen, aus jeweils zwei Gegenständen 18 (Figur 8) gebildeten Gegenstandsgruppe 23 (Figur 10) vorgesehen. Das Füllrohr 6 weist einen Einsatz 125 auf, welcher an die horizontalen Abmessungen dieser Gegenstandsgruppe 23 angepasst ist (Figur 11).

Jeweils zwei sich überlappende Gegenstände 23 (Figur 11) sind in horizontaler Richtung im Stapel 37 nebeneinander vorgesehen, wobei der Einsatz 125 zwei auf gegenüberliegenden geraden Seitenwänden 45 des Füllrohres 6 nach innen spitz zulaufende, zwischen die beiden Gegenstände 18 sich erstreckenden Spitzen 40 aufweist, um die Gegenstände 18 in vertikaler Richtung zu führen. Derart werden die beiden runden, sich mit ihren Rändern 24 überlappenden Gegenstände 18 und damit der Stapel 37 während des Falls geführt, indem im Füllrohr dieser Einsatz 125 vorgesehen ist, welcher der Geometrie der Gegenstände 18 angepasst ist, um diese während ihres Falls im Füllrohr 6 zu stabilisieren. Dabei ist das Füllrohr 6 in herkömmlicher Weise ausgeführt. Es weist vier gerade Seitenwände 145 auf. Der Einsatz 125 ist austauschbar. Wenn eine andere Gegenstandsgeometrie oder Gegenstandsgruppe gestapelt werden soll, wird er durch einen Einsatz 125 anderer Geometrie ersetzt. Er kann auch gänzlich entfernt werden. Der Einsatz 125 bildet im Füllrohr 6 zwei Entlüftungskanälen 39 zum nach oben Strömen von Luft, welche von den fallenden Gegenständen 18 aus dem unteren Ende des Folienschlauches 5 verdrängt wird.

In einem weiteren Ausführungsbeispiel (Figur 12) weist das Füllrohr 6 vier Seitenwände 1^{Λ}45, 146 auf, wovon zwei gerade 145 und zwei 146 gleichmäßig gekrümmt sind. Der Einsatz 125 besteht aus vier vertikal ausgerichteten Stegen. Derart wird kein reiner Entlüftungskanal ausgebildet. Es entsteht jedoch eine teilweise Entlüftungsfunktion. Bei diesem Ausführungsbeispiel kann von fallenden Gegenstandsgruppen 23 zur Seite gedrängte Luft zwischen jeweils zwei Stegen des Einsatzes 125 gelangen.

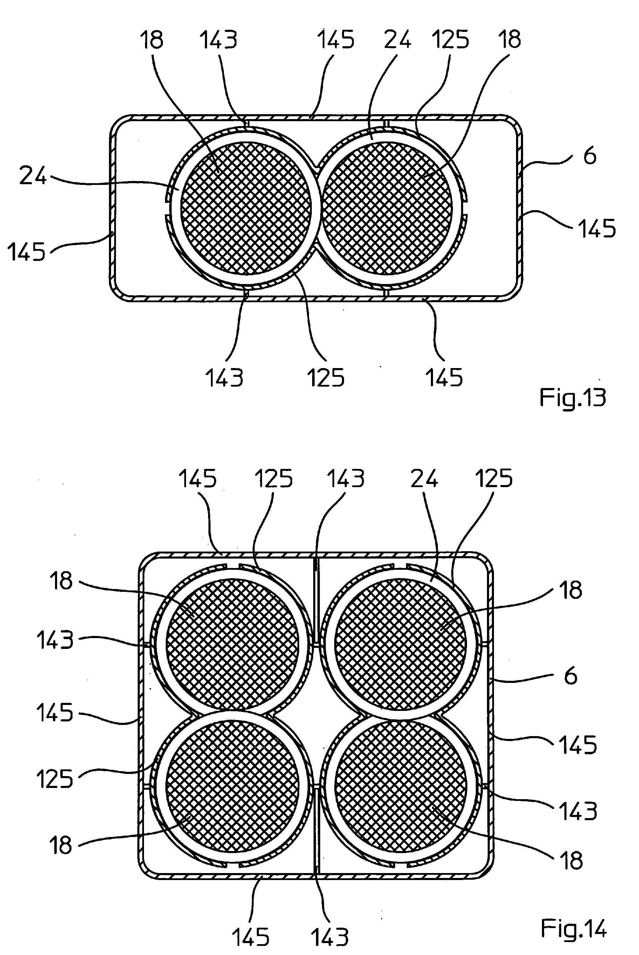

Beim Ausführungsbeispiel der Figur 13 ist der Einsatz 125 anders ausgeführt und austauschbar.

Beim Ausführungsbeispiel der Figur 14 dient ein über eine Befestigung 143 im Füllrohr 6 angebrachter Einsatz 125 jeweils dazu eine aus vier runden Gegenständen 18 bestehende Gegenstandsgruppen 23 zu stabilisieren. Bei diesem, wie bei allen Ausführungsbeispielen spielt es keine Rolle, ob jeweils ein kompletter Stapel 37 aus Gegenstandsgruppen 23 durch das Füllrohr 6 fällt, oder ob jeweils eine Gegenstandsgruppe 23 nacheinander durch das Füllrohr 6 fällt um erst im unteren Ende des Folienschlauches 5 (Figur 9) einen Stapel 37 zu bilden.

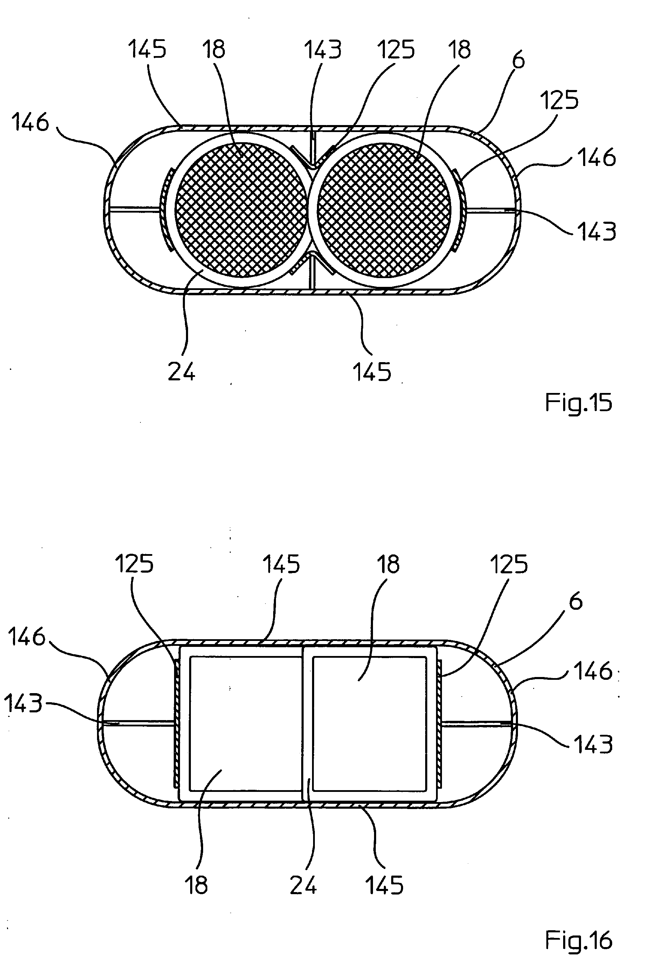

Beim Ausführungsbeispiel der Figur 15 werden ebenso, wie bei den vorherigen Ausführungsbeispielen kreisförmig begrenzt ausgestaltete Gegenstände 18 im Füllrohr 6 geführt. Dabei ist der Einsatz 125 wieder anders ausgeführt.

Beim Ausführungsbeispiel der Figur 16 werden annähernd rechteckige Gegenstände 18 im Füllrohr 6 geführt.

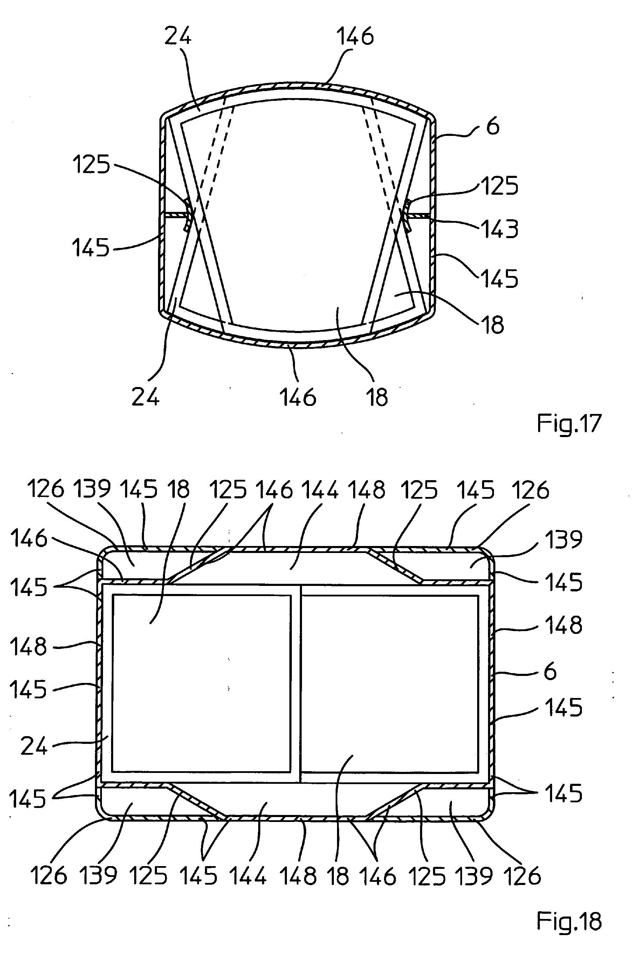

Beim Ausführungsbeispiel der Figur 17 werden Stapel 137 aus aufeinander gelegten Gegenständen 18 gebildet, welche teilweise gerade und teilweise rund ausgestaltet sind. Der im Füllrohr 6 vorgesehene Einsatz 125 ragt mittig von gegenüberliegenden Seiten in die Gegenstandsgruppe 23 hinein. Diese können derart geführt werden, da die Gegenstände 18 abwechselnd um 180 Grad gedreht durch das Füllrohr 6 fallen.

Beim Ausführungsbeispiel der Figur 18 wird eine aus zwei Gegenständen 18 gebildete Gegenstandsgruppe 23 in einem Füllrohr 6 geführt, welches in einer einstückigen Weise einen Einsatz 125 bildet. Das Füllrohr 6 weist in seinen Ecken vier Aufsätze 126 auf, die jeweils einen Entlüftungskanal 139 begrenzen. Es sind zwei an eine Fallstrecke angrenzende Kanäle 144 vorgesehen. Die Kanäle 144 sind zu den Gegenständen 18 hin offen und nehmen seitlich weggedrängte Luft auf. Die vier am speziell die Geometrie der Gegenstandsgruppen 23 ausgebildeten, nicht in herkömmlicher Weise ausgestalteten Füllrohr 6 vorgesehenen Aufsätze 126 dienen dazu, gemeinsam mit zwei gekrümmten (besser geknickten) Seitenwänden 146 und zwei geraden Seitenwänden 145 vier nach außen hin lediglich als gerade Seitenwände 145 wirkende Füllrohraußenseiten zu bilden, um einen guten Folienlauf zu erreichen.

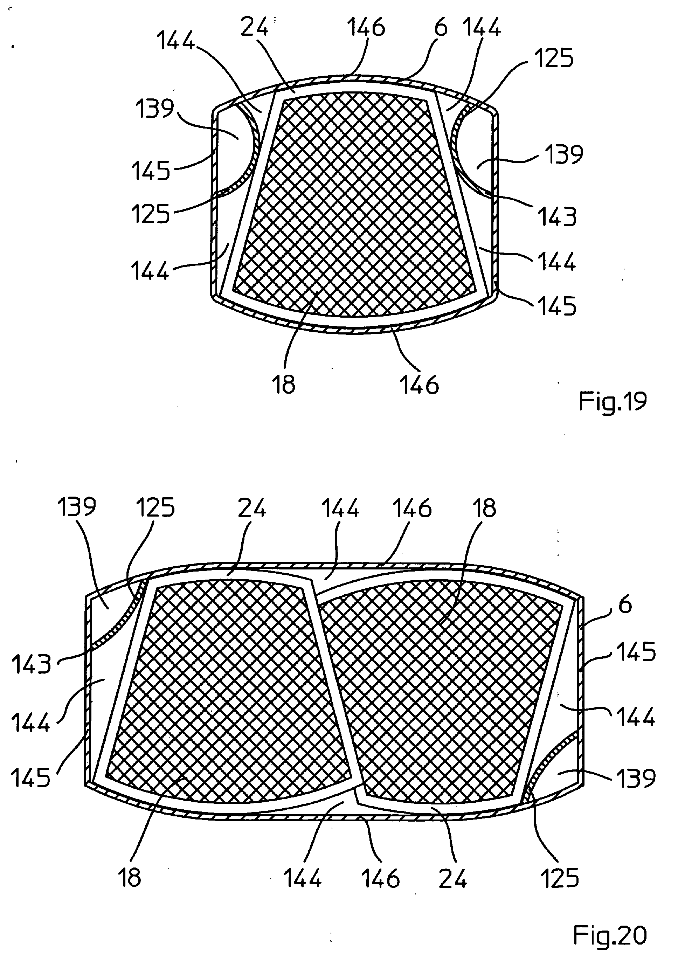

Bei den Ausführungsbeispielen der Figuren 17 und 20 werden Gegenstände 18 mit eigentümlicher Geometrie in Form eines Einzelstapels (Figur 19) bzw. eines Doppelstapels (Figur 20) in Schlauchbeuteln 16 verpackt.

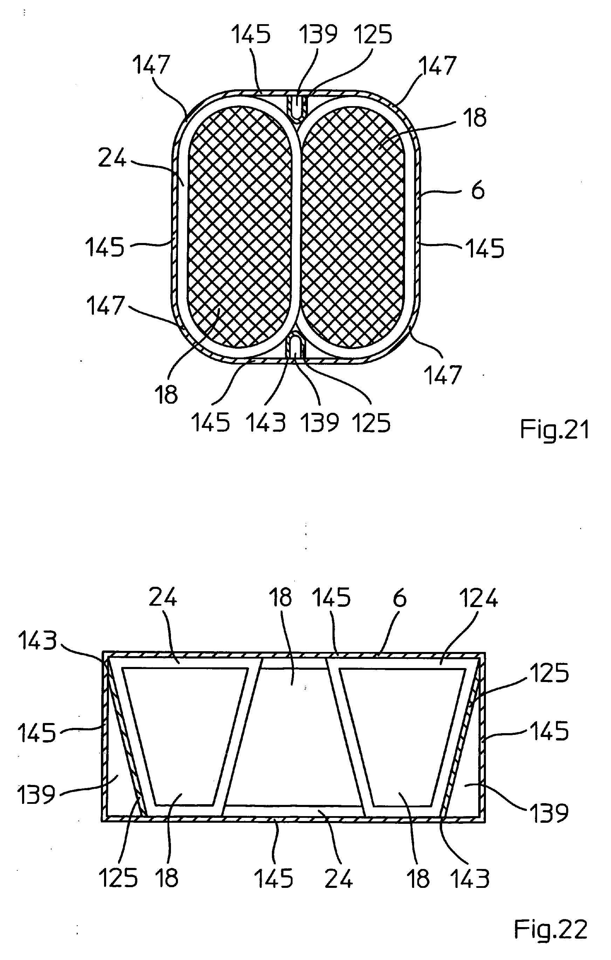

Beim Ausführungsbeispiel der Figur 21 sind gerade Seitenwände 145 des Füllrohres 6 über speziell auf die Geometrie der Gegenstandsgruppe 23 angepasste Rundungen 147 miteinander verbunden, um die Gegenstände 18 besser führen zu können.

Beim Ausführungsbeispiel der Figur 22 wird eine aus drei trapezförmigen Gegenständen 18 gebildete Gegenstandsgruppe 23 in einem entsprechenden adaptierten Einsatz 125 geführt.

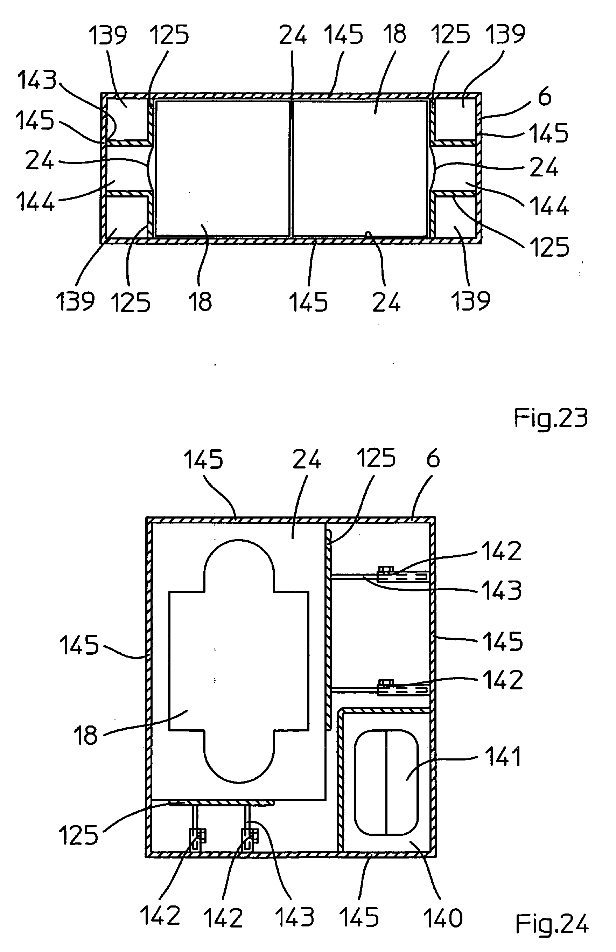

Beim Ausführungsbeispiel der Figur 23 wird eine aus zwei rechteckigen Gegenständen 18 gebildete Gegenstandsgruppe 23 in einem Füllrohr 6 mit einem Einsatz 125 geführt, welcher zwei an die Fallstrecke angrenzende Kanäle 144 und vier Entlüftungskanäle 139 begrenzt. Die Gegenstände 18 weisen einen umlaufenden Rand 24 auf. Der Einsatz 125 ist so bemessen, dass die Gegenstände 18 nur mit umgeknicktem Rand 24 in den Einsatz 125 passen, und dass ein Teil des Randes 24 in den Kanal 144 ragt, wodurch die Gegenstände 18 sehr gut geführt werden, so dass eine stabile Stapelung erfolgt.

Beim Ausführungsbeispiel der Figur 24 weist der Einsatz 125 eine Verstelleinrichtung 142 zum Begrenzen der Gegenstände 18 auf. Eine Zugabe 141 kann durch einen zusätzlichen Befüllkanal 140 einem Schlauchbeutel 16 zugeführt werden.

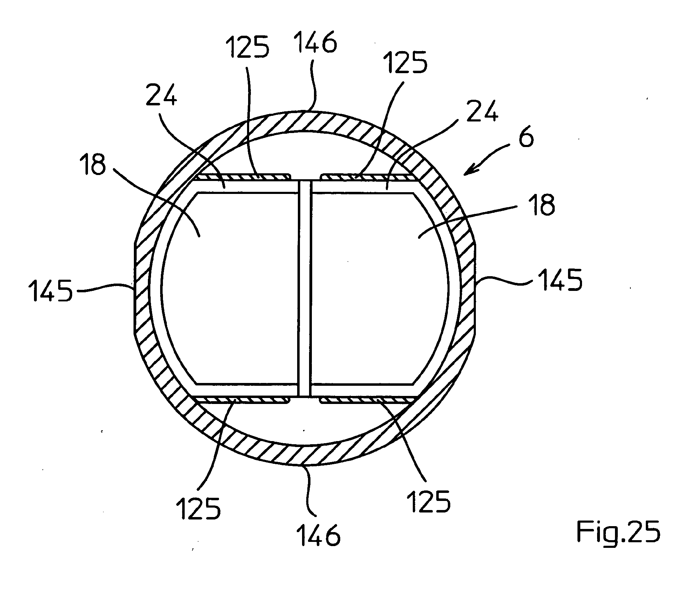

Beim Ausführungsbeispiel der Figur 25 wurde ein Füllrohr 6 mit kreisrundem Querschnitt auf gegenüberliegenden Seiten abgeschliffen, um dort gegenüber liegende Folienabzüge 8 ansetzen zu können. Der Füllrohrradius ist der Gegenstandsgruppe 23 angepasst.
- 1: Schlauchbeutelmaschine
- 2: Vorratsrolle
- 3: Folienbahn
- 4: Formschulter
- 5: Folienschlauch
- 6: Füllrohr
- 7: Befüllstation
- 8: Folienabzug
- 9: Längssiegeleinrichtung
- 10: Transportrichtung
- 11: Längsnaht
- 12: Quersiegeleinrichtung
- 13: Schweißbacke
- 14: Kopfnaht
- 15: Bodennaht
- 16: Schlauchbeutel
- 17: Trenneinrichtung
- 18: Gegenstand
- 19: Breite des Füllrohres 6
- 20: Tiefe des Füllrohres 6
- 21: Breite einer Gegenstandsgruppe 23
- 22: Tiefe einer Gegenstandsgruppe 23
- 23: Gegenstandsgruppe
- 24: äußerer Rand
- 25: innere Oberfläche
- 26: Abstand in Richtung der Breite 19
- 27: Abstand in Richtung der Tiefe 20
- 28,29: Symmetrieachse
- 30,31: Rohrsegmente
- 32: Wand
- 34, 35: Knickung
- 36: Wand
- 37: Führung
- 38: Ecke
- 39: Schräge
- 40: Führungsspitze
- 41: Gaszuführung
- 42: Entlüftung
- 43,44: Achse
- 125: Einsatz
- 126: Aufsatz
- 137: Stapel
- 139: Entlüftungskanal
- 140: Befüllkanal
- 141: Zugabe
- 142: Verstelleinrichtung
- 143: Befestigung
- 144: An Fallstrecke angrenzender Kanal
- 145: gerade Seitenwand
- 146: gekrümmte Seitenwand
- 147: Rundung
- 148: Gerader Abschnitt

## Patentansprüche

1. Vertikale Schlauchbeutelmaschine (1) mit einer von einer Vorratsrolle (2) abgewickelten Folienbahn (3), einer Formschulter (4) zum Umformen der Folienbahn (3) zu einem Folienschlauch (5), einem vertikal ausgerichteten Füllrohr (6), welches den Folienschlauch (5) aufnimmt und durch das eine Befüllung des Folienschlauches (5) möglich ist, einer Befüllstation (7) oberhalb des Füllrohres (6), einem gegen den Folienschlauch (5) und damit gegen das Füllrohr (6) wirkendem Folienabzug (8) zum Weitertransportieren der Folienbahn (3) und des Folienschlauches (5), einer Längssiegeleinrichtung (9) zum Verschweißen des Folienschlauches (5) mittels einer in Transportrichtung (10) ausgerichteten Längsnaht (11), einer Quersiegeleinrichtung (12) mit zwei gegeneinander beweglichen, den Folienschlauch (5) quer verschweißenden Schweißbacken (13) zum Erzeugen von Kopfnähten (14) und Bodennähten (15) von Schlauchbeuteln (16), sowie einer Trenneinrichtung (17) zum Abtrennen der Schlauchbeutel (16) vom Folienschlauch (5), **dadurch gekennzeichnet, dass** die Befüllstation (7) zum Abgeben jeweils einer vertikal gestapelten, aus horizontal ausgerichteten flachen, vorzugsweise scheibenförmigen Gegenständen (18) gebildeten Gegenstandsgruppe (23) vorgesehen ist, und dass am Füllrohr (6) eine Anpassung bezüglich der horizontalen Abmessungen der Gegenstandsgruppe (23) vorgesehen ist.

2. Schlauchbeutelmaschine nach Anspruch 1, **dadurch gekennzeichnet, dass** das Füllrohr (6) bezüglich seines Querschnittes an die horizontalen Abmessungen der Gegenstandsgruppe (23) angepasst ist, und dass im Füllrohr (6) als Fallstabilisatoren dienende Führungen (37) vorgesehen sind, die passgenau die im Füllrohr (6) fallenden Gegenstandsgruppen (23) begrenzen.

3. Schlauchbeutelmaschine nach Anspruch 2, **dadurch gekennzeichnet, dass** die Gegenstände (23) rund sind und in jeweils einer Ecke (38) des Füllrohres (6) eine Führung (37) in Form einer die Ecke (38) abschließenden Schräge (39) vorgesehen ist.

4. Schlauchbeutelmaschine nach Anspruch 2 oder Anspruch 3, **dadurch gekennzeichnet, dass** jeweils zwei sich überlappende Gegenstände (23) in horizontaler Richtung im Stapel nebeneinander vorgesehen sind, und dass als Führung (37) auf gegenüberliegenden Seiten des Füllrohres (6), nach innen spitz zulaufende, zwischen die beiden Gegenstände (23) sich erstreckende Führungsspitzen (40) vorgesehen sind.

5. Schlauchbeutelmaschine nach Anspruch 3 oder Anspruch 4, **dadurch gekennzeichnet, dass** eine Führung (37) eine Gaszuführung (41) und eine andere Führung (37) eine Entlüftung (42) für das untere Ende des Folienschlauches (6) begrenzt.

6. Schlauchbeutelmaschine nach einem der Ansprüche 1 bis 5, **dadurch gekennzeichnet, dass** die Breite (19) und die Tiefe (20) des Füllrohres (6) der Breite (21) und Tiefe (22) einer Gegenstandsgruppe (23) derart angemessen sind, und die Gegenstandsgruppe (23) derart oberhalb des Füllrohres (6) platziert ist, dass auf gegenüberliegenden Seiten der Gegenstandsgruppe (23) jeweils zwischen dem äußeren Rand (24) der Gegenstandsgruppe (23) und der inneren Oberfläche (25) des Füllrohres (6) ein erster gleicher Abstand (26) in Richtung der Breite (19) und ebenso ein zweiter gleicher Abstand (27) in Richtung der Tiefe (20) des Füllrohres (6) vorgesehen ist, dass diese Abstände (26, 27) nicht alle den Wert Null haben, dass das Füllrohr (6) einen zu Symmetrieachsen (28, 29) der Gegenstandsgruppe (23) symmetrischen Querschnitt aufweist, und dass zwei gegenüberliegende, zueinander parallele, in Transportrichtung (10) sich erstreckende Rohrsegmente (30, 31) des Füllrohres (6) vorgesehen sind, an welchen die Folienabzüge (8) angreifen.

7. Schlauchbeutelmaschine nach Anspruch 6, **dadurch gekennzeichnet, dass** die Abstände (26, 27) einen Wert zwischen Null und 10 mm haben.

8. Schlauchbeutelmaschine nach Anspruch 6 oder Anspruch 7, **dadurch gekennzeichnet, dass** Wände (32) des Füllrohres (6), die einander gegenüber liegen, und die nicht zum Angreifen der Folienabzüge (8) vorgesehen sind, einen nach außen weisenden Bogen, eine nach außen gerichtete Knickung (34) oder mindestens zwei nach außen gerichtete Knickungen (34, 35) aufweisen.

9. Schlauchbeutelmaschine nach Anspruch 8, **dadurch gekennzeichnet, dass** sich die Rohrsegmente (30, 31) gänzlich über gegenüberliegende Wände (36) erstrecken.

10. Schlauchbeutelmaschine nach Anspruch 1, **dadurch gekennzeichnet, dass** im Füllrohr (6) ein Einsatz (125) vorgesehen ist, welcher der Geometrie der Gegenstände (18) angepasst ist, um diese während ihres Falls im Füllrohr (6) zu stabilisieren.

11. Schlauchbeutelmaschine nach Anspruch 10, **dadurch gekennzeichnet, dass** das Füllrohr (6) nur Seitenwände aufweist, die gerade (145) oder gekrümmt (146) sind, und die wahlweise über Rundungen (147) miteinander verbunden sind.

12. Schlauchbeutelmaschine nach Anspruch 10 oder Anspruch 11, **dadurch gekennzeichnet, dass** am Füllrohr (6) mindestens ein Aufsatz (126) vorgesehen ist, welcher gemeinsam mit einem geraden Abschnitt (148) des Füllrohres (6) eine gerade Seitenwand (145) bildet.

13. Schlauchbeutelmaschine nach Anspruch 10, Anspruch 11 oder Anspruch 12, **dadurch gekennzeichnet, dass** der Einsatz (125) einen an eine Fallstrecke der Gegenstände (18) angrenzenden, zu den Gegenständen (18) hin offenen Kanal (144) begrenzt.

14. Schlauchbeutelmaschine nach Anspruch 13, **dadurch gekennzeichnet, dass** die Gegenstände (18) einen umlaufenden Rand (24) aufweisen, dass der Einsatz (125) so bemessen ist, dass die Gegenstände (18) nur mit umgeknicktem Rand (24) in den Einsatz (125) passen, und dass ein Teil des Randes (24) in den Kanal (144) ragt.

15. Schlauchbeutelmaschine nach einem der Ansprüche 10 bis 14, **dadurch gekennzeichnet, dass** im Füllrohr (6) mindestens ein Entlüftungskanal (139) zum nach oben Strömen von Luft vorgesehen ist, welche von den fallenden Gegenständen (18) verdrängt wird.

16. Schlauchbeutelmaschine nach einem der Ansprüche 10 bis 15, **dadurch gekennzeichnet, dass** der Einsatz (125) eine Verstelleinrichtung (42) zum Begrenzen der Gegenstände (18) aufweist.

17. Schlauchbeutelmaschine nach einem der Ansprüche 10 bis 16, **dadurch gekennzeichnet, dass** im Füllrohr (6) ein zusätzlicher Befüllkanal vorgesehen ist.

18. Schlauchbeutelmaschine nach einem der Ansprüche 10 bis 17, **dadurch gekennzeichnet, dass** der Einsatz (125) wahlweise einsetzbar oder austauschbar ist.
